## Europäisches Patentamt
## European Patent Office
## Office européen des brevets

(11) Veröffentlichungsnummer: **0 053 741**
**B1**

(12) **EUROPÄISCHE PATENTSCHRIFT**

(45) Veröffentlichungstag der Patentschrift:
**19.09.84**

(51) Int. Cl.³: **C 08 B 11/20**, C 08 B 31/08

(21) Anmeldenummer: **81109731.0**

(22) Anmeldetag: **17.11.81**

(54) **Reinigung von Cellulose- und Stärkeethern.**

(30) Priorität: **27.11.80 DE 3044696**

(43) Veröffentlichungstag der Anmeldung:
**16.06.82 Patentblatt 82/24**

(45) Bekanntmachung des Hinweises auf die Patenterteilung:
**19.09.84 Patentblatt 84/38**

(84) Benannte Vertragsstaaten:
**DE FR IT NL SE**

(56) Entgegenhaltungen:
DE - A - 2 038 310
FR - A - 1 298 961

KIRK-OTHMER: "Encyclopedia of chemical technology", 3. Auflage, Teil 10: "Filtration", 1980, John Wiley & Sons, Seiten 284-337 New York, U.S.A.

(73) Patentinhaber: **Wolff Walsrode Aktiengesellschaft,
Postfach, D-3030 Walsrode 1 (DE)**
Patentinhaber: **BAYER AG, Konzernverwaltung RP
Patentabteilung, D-5090 Leverkusen 1 Bayerwerk (DE)**

(72) Erfinder: **Bernert, Claus-Rüdiger, Dr., Radewiesen 23,
D-3030 Walsrode (DE)**
Erfinder: **Hartwig, Volker, Idinger Heide Nr. 5,
D-3032 Fallingbostel (DE)**
Erfinder: **Kords, Christian, Dipl.-Ing., Ahornring 29,
D-3030 Walsrode (DE)**
Erfinder: **Redeker, Detmar, Dr., Roggendorfstrasse 53,
D-5000 Köln 80 (DE)**

(74) Vertreter: **Kutzenberger, Helga, Dr. et al, c/o Bayer AG
Zentralbereich Patente Marken und Lizenzen,
D-5090 Leverkusen 1, Bayerwerk (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der Erfindung ist ein Verfahren zur kontinuierlichen Reinigung und Aufarbeitung von Cellulose- oder Stärkeethern.

Cellulose- und Stärkeether, wie z. B. Natrium-Carboxymethylcellulose, Hydroxyethylcellulose, Methylcellulose, Methylhydroxypropylcellulose, Carboxymethylstärke und Ethylhydroxyethylcellulose werden hergestellt, indem die Cellulose bzw. Stärke mit Natronlauge behandelt und zur Veretherung mit einer oder mehreren Verbindungen wie Monochloressigsäure, Ethylenoxid, Methylchlorid, Propylenoxid oder Ethylchlorid bei erhöhter Temperatur umgesetzt wird.

Als Nebenprodukte fallen dabei Salze wie z. B. Natriumchlorid, Natriumglykolat oder Natriumacetat an, die aus anwendungstechnischen Gründen aus dem Cellulose- bzw. Stärkeether entfernt werden müssen.

Die Reinigung erfolgt üblicherweise mit heißem Wasser, wenn das Produkt in diesem Medium flockt, wie Methylcellulose und viele ihrer Mischether. Tritt diese Flockung in Wasser bei erhöhter Temperatur nicht ein, wie bei Carboxymethylcellulose, Carboxymethylstärke, Hydroxyethylcellulose und unter Verwendung großer Epoxidmengen hergestellter Methylcellulose, so muß dem Wasser eine mit Wasser mischbare Komponente, vorzugsweise ein niederer Alkohol zugesetzt werden, z. B. Methanol, Ethanol oder Isopropanol. Die Konzentration des Alkohols wird so eingestellt, daß die maximale Salzlöslichkeit gewährleistet ist und das Reaktionsprodukt nicht gelöst wird, d. h. je nach Art und Temperatur zwischen 45 und 75 Gew.-%.

Die bisher üblichen Reinigungsverfahren (DOS 1 801 553, DOS 2 457 187) gehen meist von dem feuchten Rohprodukt aus, das mit einem geeigneten Alkohol-Wasser-Gemisch oder heißem Wasser angemaischt und nach unterschiedlicher Verweilzeit mit Zentrifugen, Dekantern, Trommel-, Teller- oder Bandfiltern abgetrennt wird. Alternativ besteht nach DE-PS 2 017 454 die Möglichkeit, das getrocknete noch salzhaltige Produkt in Granulatform in einem Gegenstromextraktor zu reinigen. Während das letztere Verfahren den Nachteil aufweist, daß die erforderliche Zwischentrocknung energieaufwendig ist, stören bei der Reinigung des Feuchtgutes die je nach Vorbehandlung mehr oder weniger langen Extraktionszeiten. So ist bei manchen Herstellungsverfahren, bei denen der Veretherungsschritt in einem organischen Lösungsmittel erfolgt, dieses nicht notwendig mit dem Reinigungsmittel identisch. Beispielsweise kann die Veretherung von Cellulose mit Ethylenoxid in Isopropanol erfolgen, während zur Reinigung ein Methanol enthaltendes Gemisch erforderlich ist. Die Herstellung von Carboxymethylcellulose bzw. Carboxymethylstärke verläuft ähnlich, da die Veretherung vorzugsweise in Isopropanol, tert.-Butanol oder Gemischen von Ethanol mit hydrophobierenden Lösungsmitteln, z. B. Benzol oder Toluol, durchgeführt und zur Reinigung ein Gemisch von Methanol oder Ethanol mit Wasser verwendet wird.

Bei diesen und ähnlich hergestellten Produkten erfolgte die Aufarbeitung üblicherweise durch Abtrennung des Veretherungsmittels durch Filtration oder Zentrifugieren, Trocknung des Reaktionsproduktes und Anmaischen des Feuchtgutes mit dem Reinigungsmittel und nachfolgende Isolierung des Reaktionsproduktes. Wegen der durch die erste Feststoffabtrennung eingetretenen Verdichtung bzw. der durch die Lösungsmittelverdampfung wachsenden Teilchengröße und Hautbildung sind die Lösezeiten für die Extraktion nicht unerheblich. Sie liegen im Bereich von 15 Minuten im batch-prozeß (US-PS 3 498 971) bis zu mittleren Verweilzeiten von über 60 Minuten bei kontinuierlicher Extraktion. Außerdem reicht bei den hohen Reinheitsanforderungen eine Extraktionsstufe kaum aus, so daß das Produkt im Gegenstrom oft in bis zu drei Stufen extrahiert werden muß.

Das erfindungsgemäße Verfahren vermeidet Zwischentrocknungen und Anmaischungen und führt in kontinuierlicher, kombinierter Abtrennung des Suspendiermittels und Extraktion und Abtrennen des Reinigungsmittels direkt zu einem hochgereinigten Cellulose- oder Stärkeether.

Gegenstand der Erfindung ist ein kontinuierliches Verfahren zur Reinigung und Isolierung von nach bekannten Methoden hergestellten Cellulose- oder Stärkeethersuspensionen durch Abfiltrieren des Suspendiermittels, Extrahieren des Reaktionsproduktes mit einem vom Suspendiermittel unterschiedlichen Reinigungsmittel und Trockensaugen, das dadurch gekennzeichnet ist, daß unmittelbar anschließend an das Abfiltrieren des Suspendiermittels auf demselben kontinuierlich umlaufenden Filter das Reaktionsprodukt wenigstens 1 × im Gegenstrom mit dem Reinigungsmittel extrahiert wird.

Nach dem erfindungsgemäßen Verfahren können vorzugsweise solche Cellulose- oder Stärkeether gereinigt werden, die in heißem Wasser nicht flocken, wie z. B. Carboxymethylcellulose, Hydroxyethylcellulose, Carboxymethylstärke oder Methylhydroxypropylcellulose bzw. Methylhydroxyethylcellulose mit so hohem Gehalt an Hydroxyethyl- bzw. Hydroxypropylgruppen, daß eine Flockung in heißem Wasser nicht mehr eintritt.

Als Reinigungs- bzw. Extraktionsmittel werden vorzugsweise die bekannten Wasser oder Wasser/Alkohol-Gemische wie z. B. Wasser und Methanol oder Ethanol eingesetzt.

Je nach Celluloseether-Typ sollte der Wassergehalt im Bereich von 20—40 Gew.-% liegen. Einige Reaktionsprodukte, die mit den binären Systemen aus Wasser und Methanol oder Ethanol zu stark quellen und somit schlecht filtrierbar sind, z. B. Hydroxyethylcellulose und bestimmte Mischether der Methylcellulose, lassen sich durch zusätzliche Verwendung von Isopropanol als Reinigungsmittel extrahieren.

Das erfindungsgemäße kontinuierliche Reinigungsverfahren erfolgt vorzugsweise durch Aufgabe der Celluloseether- oder Stärkeethersuspensionen auf ein kontinuierlich arbeitendes Filter, Absaugen des überschüssigen Suspendiermittels mittels Anlegen eines Unterdrucks auf der Unterseite des Filters, gegebenenfalls Trockensaugen des gebildeten Feststoffkuchens, Aufgabe des Reinigungsmittels auf den Feststoffkuchen, Absaugen des salzhaltigen Reinigungsmittels sowie anschließendes Trockensaugen des gereinigten Feststoffkuchens aus Cellulose- oder Stärkeether.

Unter der Berücksichtigung, daß das Suspendiermittel ein nur geringes Salzlösevermögen aufweist, das zur Reinigung nicht ausreicht und der Tatsache, daß bei getrennter Feststoffabtrennung und Wiederanmaischung Lösezeiten in der Größenordnung von 15 bis über 60 Minuten erforderlich sind, um ein hochgereinigtes Produkt zu erhalten, war es überraschend, daß bei der kombinierten Verfahrensweise die auf dem kontinuierlich arbeitenden Filter für die Feststoffabtrennung und Reinigung zur Verfügung stehenden wenigen Sekunden ausreichen.

Der Feststoffgehalt der nach der Veretherung resultierenden Suspension kann in weiten Bereichen variiert werden und ist nach oben lediglich durch die Förderung begrenzt, nach unten durch Wirtschaftlichkeitserwägungen. Bevorzugt ist ein Gehalt zwischen 5 und 20%.

Nach dem Abfiltrieren des Suspendiermittels wird der Filterkuchen vorzugsweise noch auf einen Restfeuchtigkeitsgehalt von 40−70 Gew.-% trockengesaugt und in der anschließenden Waschzone durch Aufgabe des Reinigungsmittels auf das Filter im Gegenstrom extrahiert. Das Waschmittel kann in einer oder mehreren Stufen auf das Filter aufgegeben werden, wobei das durchgesaugte Filtrat in einer anderen Zone des Filters wiederverwendet wird. Wenigstens 1 ×, vorzugsweise 3 × wird im Gegenstrom extrahiert.

An die Waschzone schließt sich eine Trockensaugzone an, in der auch Dampf oder heißer Stickstoff aufgegeben werden kann. Anschließend wird der Kuchen aus Cellulose- oder Stärkeether vom Filter abgetrennt und der weiteren Bearbeitung zugeführt.

Geeignete Filter sind solche, die eine definierte Einteilung der Filterfläche in einzelne Zonen ermöglichen. Zu nennen sind kontinuierlich umlaufende Teller-, Vakuumtrommel-, Drucktrommel- und Bandfilter von geeigneter Größe. Das Trommelfilter weist gegenüber dem Tellerfilter den Vorteil auf, daß Zonen von gleicher Länge eingestellt werden können. Vorzugsweise werden für das erfindungsgemäße Verfahren Bandfilter eingesetzt, die mit einer Geschwindigkeit von 10 bis 100 mm/s, vorzugsweise 15 bis 40 mm/s umlaufen.

Besonders vorteilhaft ist das erfindungsgemäße Verfahren wegen des geringen Verbrauchs an Reinigungsmittel. Durch Anwendung des Gegenstromprinzips kann das Stoffverhältnis von Celluloseoder Stärkeether zum Reinigungsmittel unter 1 : 10 liegen, selbst mit dem Verhältnis 1 : 7 lassen sich noch sehr gute Reinigungseffekte erzielen.

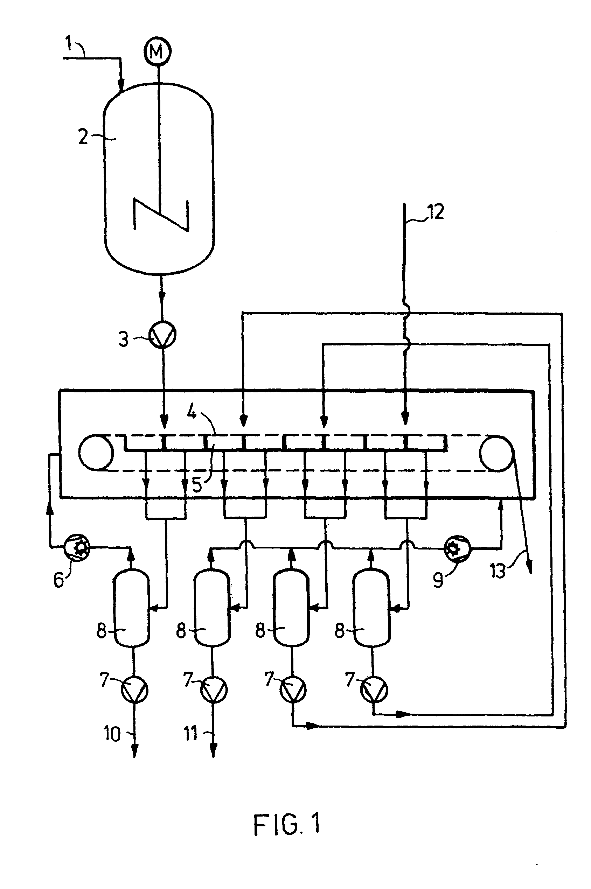

Abbildung 1 zeigt die Anordnung eines Bandfilters. Die Suspension (1) des Rohproduktes wird aus dem Rührbehälter (2) über die Pumpe (3) auf das Bandfilter gefördert und der resultierende Produktkuchen mit dem Reinigungsmittel (12) behandelt. Das Filtrat tritt durch das umlaufende Filterband (4) in eine der Saugwannen (5) ein, welche über die Filtratabscheider (8) mit den Vakuumpumpen (6, 9) verbunden sind. Das Filtrat (11) wird über die Filtratpumpen (7) auf die nächste Waschzone zurückgeführt oder nach Durchlaufen aller Zonen aufgearbeitet. Das Suspendiermitel (10) wird abgezogen. Das gereinigte Produkt (13) wird wie bekannt aufgearbeitet und wie üblich verwendet.

## Beispiel 1

Eine direkt nach der üblichen Veretherung erhaltene Suspension von 10 Gew.-% Carboxymethylcellulose in einem Gemisch aus 88 Gew.-% Isopropanol und Wasser wird mit einem Durchsatz von 1900 l/h über eine Ansaugwanne auf ein Vakuumtrommelfilter von 500 mm Länge und 700 mm Durchmesser gegeben. Die Trommeloberfläche ist in 20 Felder unterteilt; die Filtrate können über einen Steuerkopf getrennt entnommen werden, die Drehzahl beträgt ca. 1 min$^{-1}$. Nach Abtrennung des Suspensionsmittels und Trockensaugen wird in zwei Zonen im Gegenstrom über Düsen mit 1600 l/h eines Gemisches aus 65% Methanol und 35% Wasser gereinigt. Das Reinigungsmittel wird getrennt abgeführt und nach Wiederaufbereitung wieder als Waschmittel verwendet.

Die restlichen Filtersektoren dienen als Trockensaugzone; der 20 mm starke Kuchen aus Carboxymethylcellulose wird mittels eines Standmessers vom Filter abgestreift. Die gereinigte Carboxymethylcellulose weist noch einen Feuchtegehalt von 61,5% und einen Natriumchloridgehalt von 0,45 Gew.-% auf; sie kann direkt getrocknet und wie üblich verwendet werden.

## Beispiel 2

Eine neutralisierte Suspension von 10 Gew.-% Hydroxyethylcellulose in dem von der Veretherung stammenden Gemisch aus 90% Isopropanol und 10% Wasser wird, wie in Beispiel 1, in einer Menge von 1900 l/h über ein Vakuumtrommelfilter vom Suspensionsmittel befreit und nach Trockensaugen über zwei Waschzonen im Gegenstrom mit 1500 l/h eines Gemisches aus 30% Isopropanol, 35%

0 053 741

Methanol und 30% Wasser gewaschen. Das 65% Feuchte enthaltende Produkt weist einen Natriumacetatgehalt von 0,12 Gew.-% auf.

Beispiel 3

Auf ein Bandfilter mit einer Länge von 3200 mm und einer Arbeitsbreite von 250 mm werden 1000 l/h Carboxymethylcellulose-Suspension der Zusammensetzung des Beispiels 1 gegeben. Unterhalb des Filterbandes sind 8 Saugwannen angeordnet, denen insgesamt 2 Vakuum- und 4 Filtratpumpen zugeordnet sind. Nach einer etwa 700 mm langen Trockensaugzone folgen 2 bzw. 3 Waschzonen, wie in Tabelle 1 angegeben, in den dem der Ether im Gegenstrom mit 700—1000 l/h eines 65%igen Methanols gereinigt wird. Die Bandgeschwindigkeit liegt zwischen 16—38 mm/s.

Am Ende der Trockensaugzone wurden die in Tabelle 1 angegebenen Ergebnisse erzielt:

Tabelle 1

| Waschzonen | 2 | 2 | 3 | 3 | 3 |
|---|---|---|---|---|---|
| Reinigungsmedium (l/h) | 1000 | 700 | 1000 | 850 | 700 |
| Kuchenhöhe (mm) | 16 | 18 | 20 | 17 | 18 |
| Kuchenfeuchte (Gew.-%) | 58 | 62 | 65 | 60 | 61 |
| NaCl-Gehalt (Gew.-%) | 0,23 | 0,55 | 0,10 | 0,17 | 0,29 |

Beispiel 4

Das Beispiel 3 wird wiederholt unter Verwendung von 1000 l/h des mit Wasser eingestellten Destillats des Abgangswaschmediums, welches aus einem Gemisch von 22 Gew.-% Isopropanol, 43 Gew.-% Methanol und 35 Gew.-% Wasser besteht. Der resultierende NaCl-Gehalt des Kuchens liegt bei 0,12 Gew.-%.

Beispiel 5

Auf das in Beispiel 3 beschriebene Bandfilter werden 530 l/h einer Suspension von 18 Gew.-% Carboxymethylstärke in einem Gemisch von 89 Gew.-% Isopropanol und 11 Gew.-% Wasser gegeben. Die in drei Waschzonen durchgeführte Wäsche mit 760 l/h eines Gemisches aus 25 Gew.-% Isopropanol, 45 Gew.-% Methanol und 30 Gew.-% Wasser liefert ein gereinigtes Produkt mit 0,33 Gew.-% Rest-NaCl-Gehalt.

Beispiel 6

Das Beispiel 3 wird wiederholt unter Verwendung von 850 l/h eines Gemisches aus 68 Gew.-% Ethanol und 32 Gew.-% Wasser, welches auf 3 Waschzonen im Gegenstrom aufgegeben wird. Der resultierende NaCl-Gehalt liegt bei 0,29 Gew.-%.

**Patentansprüche**

1. Verfahren zur kontinuierlichen Reinigung und Isolierung von nach bekannten Methoden hergestellten Cellulose- oder Stärkeethersuspensionen durch Abfiltrieren des Suspendiermittels, Extrahieren des Reaktionsproduktes mit einem vom Suspendiermittel unterschiedlichen Reinigungsmittel und Trockensaugen, dadurch gekennzeichnet, daß der Cellulose- oder Stärkeether unmittelbar nach dem Abfiltrieren des Suspendiermittels auf demselben kontinuierlich umlaufende Filter wenigstens 1 × im Gegenstrom mit einem Reinigungsmittel extrahiert und anschließend trockengesaugt wird.

2. Verfahren nach Anspruch 1, dadurch gekennzeichnet, daß als Filter ein Bandfilter, das mit einer Geschwindigkeit von 10 bis 100 mm/s, vorzugsweise 15 bis 40 mm/s umläuft, eingesetzt wird.

3. Verfahren nach Ansprüchen 1 und 2, dadurch gekennzeichnet, daß Hydroxyethyl-, Methylhydroxypropyl- oder Methylhydroxyethylcellulose oder Carboxymethylcellulose oder -stärke gereinigt und isoliert wird.

4

**0 053 741**

4. Verfahren nach Ansprüchen 1 bis 3, dadurch gekennzeichnet, daß als Reinigungsmittel Wasser oder Wasser/Alkohol-Gemisch verwendet wird.

5. Verfahren nach Ansprüchen 1 bis 4, dadurch gekennzeichnet, daß das Verhältnis Cellulose- oder Stärkeether zum Reinigungsmittel maximal bei 1 : 10 liegt.

6. Verfahren nach Ansprüchen 1 bis 5, dadurch gekennzeichnet, daß der Cellulose- oder Stärkeether 3 × extrahiert wird.

**Claims**

1. Process for the continuous purification and isolation of cellulose or starch ether suspensions prepared by known methods, by filtering off the suspending agent, extracting the reaction product with a purifying agent different from the suspending agent and drying it with suction, characterised in that the cellulose ether or starch ether, immediately after the suspending agent has been filtered off, is extracted with a purifying agent at least once countercurrently, on the same continuously circulating filter, and is then dried by suction.

2. Process according to Claim 1, characterised in that the filter used is a band filter which circulates at a speed of 10 to 100 mm/s, preferably 15 to 40 mm/s.

3. Process according to Claims 1 and 2, characterised in that hydroxyethyl cellulose, methylhydroxypropyl cellulose or methylhydroxyethyl cellulose or carboxymethyl cellulose or carboxymethyl starch is purified and isolated.

4. Process according to Claims 1—3, characterised in that water or a water/alcohol mixture is used as the purifying agent.

5. Process according to Claims 1—4, characterised in that the ratio of cellulose ether or starch ether to purifying agent is at most 1 : 10.

6. Process according to Claims 1—5, characterised in that the cellulose ether or starch ether is extracted 3 times.

**Revendications**

1. Procédé pour la purification continue et l'isolement de suspensions d'éthers de cellulose ou d'amidon fabriqués par des méthodes connues, par filtration du milieu de suspension, extraction du produit de réaction avec un agent de purification différent de l'agent de suspension et essorage à sec, caractérisé en ce que l'éther de cellulose ou d'amidon est extrait au moins une fois à contre-courant sur le même filtre tournant en continu avec un agent de purification, juste après la séparation du milieu de suspension par filtration, et ensuite essoré à sec.

2. Procédé selon la revendication 1, caractérisé en ce que l'on ultilise comme filtre un filtre à ruban qui tourne à une vitesse de 10 à 100 mm/s, de préférence 15 à 40 mm/s.

3. Procédé selon les revendications 1 et 2, caractérisé en ce que l'on purifie et on isole l'hydroxyéthylcellulose, la méthylhydroxypropylcellulose ou la méthylhydroxyéthylcellulose, ou bien la carboxyméthylcellulose ou le carboxyméthylamidon.

4. Procédé selon les revendications 1—3, caractérisé en ce que l'on utilise comme agent de purification l'eau ou un mélange eau-alcool.

5. Procédé selon les revendications 1—4, caractérisé en ce que le rapport de l'éther de cellulose ou d'amidon à l'agent de purification est au maximum de 1 : 10.

6. Procédé selon les revendications 1—5, caractérisé en ce que l'on extrait trois fois l'éther de cellulose ou d'amidon.

5

0 053 741

FIG. 1

7